# EUROPEAN PATENT SPECIFICATION

(11) **EP 2 557 025 B1**
(45) Date of publication and mention of the grant of the patent: **23.03.2016**
(21) Application number: 12172523.8
(22) Date of filing: 19.06.2012
(51) Int. Cl.: B62J 6/04, B62J 15/00

(54) **Back part structure of body in saddle-ride type vehicle**
Rückenteilstruktur eines Körpers bei Sattelfahrzeug
Structure de partie arrière de la carrosserie d'un véhicule à monture à selle

(30) Priority: 11.08.2011 JP 2011175887
(43) Date of publication of application: 13.02.2013
(73) Proprietor: Honda Motor Co., Ltd., Tokyo 107-8556 (JP)
(72) Inventor: Terada, Mitsuru, Saitama, 351-0193 (JP)
(74) Representative: Weickmann & Weickmann

(56) References cited:
- EP-A2- 1 361 145
- GB-A- 2 392 894
- US-A- 3 941 994

## Description

### Technical Field

The present invention relates to a back part structure of a body in a saddle-ride type vehicle according to the preamble of claim 1.

### Background Art

In the past, the back part structure of a body in a motorcycle includes a cover member (a rear fender body) disposed above the back part of the body and a rear wheel and a tail end fender provided as a separate body from the cover member and extending downward from the inside, wherein a tail lamp is fixed to the rear face of a tail end cover, and a wall part covering a gap between the upper end of the tail end cover and the inner surface of the cover member is provided to thereby prevent mud or the like raised in the cover member from being splashed on the wiring of a tail lamp. (for example, see Japanese Patent Application No. JP-Y H6-44787).

A back part structure of a body in a saddle-ride type vehicle according to the preamble of claim 1 is known from EP 1 361 145 A2.

US 3,941,994 A discloses a tail end fender having reinforcing parts for reinforcing the top of the tail end fender, said reinforcing parts being formed on a wall of the tail end fender, and one of the reinforcing parts is covered by a light socket and a clamp.

### Summary of Invention

### Technical Problem

In the case of fitting a license plate to the tail end fender, in order to clearly mark out the license plate, sometimes a license lamp as a separate body from the tail lamp is disposed at a position spaced back from the tail end fender and the license plate is illuminated by the license lamp. In this case, since the weight increases for the license lamp, it is preferred to efficiently improve the rigidity of the tail end fender. Further, it is necessary to consider the wiring of the license lamp as well.

It is, accordingly, an object of the present invention to provide a back part structure of a body in a saddle-ride type vehicle, which can efficiently install a light device such as a license lamp on a tail end fender extending downward from the back part of the body.

### Solution to Problem

As the solution to problem, the invention according to claim 1 is characterized in that a reinforcing part (54) for reinforcing the top of the tail end fender (42) is formed on the bottom wall (52) of the recessed part (51), the reinforcing part (54) is covered by the lamp pedestal (65) from the rear, and a rib (54) as the reinforcing part (54) is formed on a rear face side of the bottom wall (52) of the recessed part (51).

The saddle-ride type vehicle includes the whole vehicle on which a rider rides straddling the vehicle body, that is, includes not only motorcycles (including a bicycle with a motor and a scooter type vehicle) but also three-wheeled (including a vehicle with two front wheels and one rear wheel in addition to a vehicle with one front wheel and two rear wheels) or four-wheeled vehicles.

The invention according to claim 2 is characterized in that wiring (27a) extended from the light device (27) is stored in the lamp pedestal (65), and the wiring (27a) is guided to a body side above the tail end fender (42) by the rib (54).

The invention according to claim 3 is characterized in that the light device (27) is a license lamp (27), and a license plate fitting part (49) is provided below the license lamp (27) in the tail end fender (42).

The invention according to claim 4 is characterized in that a fender base (41) is integrally formed above the tail end fender (42), the fender base (41) supports a second light device (26) as a separate body from the light device (27) and is fitted to the body frame (5), and the lamp pedestal (65) is mounted extending between the tail end fender (42) and the fender base (41).

The invention according to claim 5 is characterized in that in the fender base (41), a second reinforcing part (61) is formed to be connected to the reinforcing part (54) formed on the bottom wall (52) of the recessed part (51).

### Advantageous Effects of the Invention

According to the invention of claim 1, the structure can also easily cope with the case where the license lamp is disposed to project to the rear of the tail end fender, the reinforcing part can be formed on the upside (the proximal end side) of the tail end fender in proportion to increase in number of parts, and also the added reinforcing part is hidden by the lamp pedestal so that the appearance can be improved.

Furthermore, the upside of the tail end fender can be reinforced by the rib, and the rib is hidden in the lamp pedestal so that the appearance can be improved.

According to the invention of claim 2, the wiring of the light device is stored in the lamp pedestal so that the appearance can be improved, and also the wiring can be guided to the body side while being held and protected without any new part.

According to the invention of claim 3, the license lamp disposed to project to the rear of the tail end fender effectively illuminates the license plate below it, whereby conspicuousness of the license plate can be more improved.

According to the invention of claim 4, the tail end fender can be reinforced by fitting the lamp pedestal as well.

According to the invention of claim 5, the tail end fender and the fender base are integrated with each other with high rigidity.

### Brief Description of the Drawings

Fig. 1 is a left side view of a motorcycle in an embodiment of the present invention.
Fig. 2 is a left side view of a rear end part of a body of the motorcycle.
Fig. 3 is a rear view of the rear end part of the body.
Fig. 4 is a front view of the rear end part of the body.
Fig. 5 is a sectional view taken along line A-A of Fig. 3.
Fig. 6 is a sectional view taken along line B-B of Fig. 3.
Fig. 7 is an exploded perspective view of a tail end fender and a lamp pedestal of the rear end part of the body, taken from the left-hand rear.
Fig. 8 is a perspective view of the tail end fender, taken from the left-hand front.
Fig. 9 is a perspective view of the tail end fender and the lamp pedestal, taken from the left-hand upside.

### Description of Embodiments

Preferred embodiments of the present invention will now be described with reference to the attached drawings. In the following description, the directions such as the front, the rear, the right and the left are the same as those in a vehicle described in the following if not specially mentioned. An arrow FR designating the front of the vehicle, an arrow LH designating the left-hand side of the vehicle and an arrow UP designating the upside of the vehicle are shown at suitable places in the drawings used in the following description.

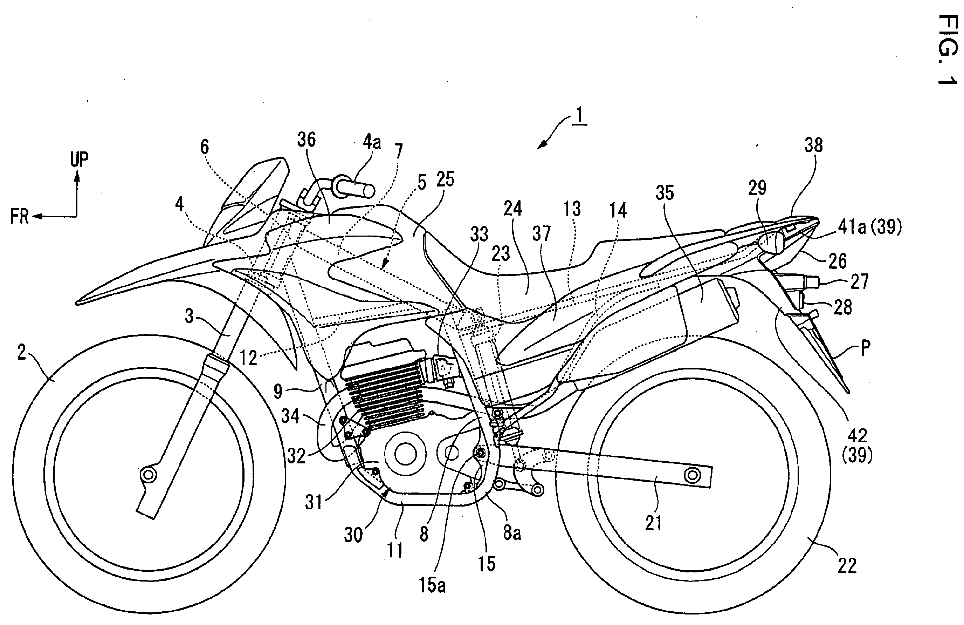

In an off-road motorcycle (a saddle-ride type vehicle) 1 shown in Fig. 1, a front wheel 2 thereof is journaled to the lower ends of right and left front forks 3, and the upper parts of the right and left front forks 3 are steerably pivoted on a head pipe 6 at the front end of a body frame 5 through a steering stem 4. A bar-type steering handlebar 4a is mounted on the top of the steering stem 4.

The body frame 5, which is formed by integrally bonding two or more kinds of steel materials by welding or the like, includes: the head pipe 6; a single main frame 7 extending from the upper part of the head pipe 6 obliquely downward to the rear at the laterally center position of the body; a pair of right and left rear frames 8 branching right and left from the rear end of the main frame 7 and extending obliquely downward to the rear more sharply than the main frame 7; and a single down frame 9 extending from the bottom of the head pipe 6 obliquely downward to the rear at the laterally center position of the body more sharply than the main frame 7.

Further the body frame 5 includes: a pair of right and left lower frames 11 branching right and left from the lower end of the down frame 9, extending obliquely downward to the rear, then curving backward and extending substantially horizontally; a single gazette frame 12 extending between the rear end of the main frame 7 and the vertically middle part of the down frame 9; a pair of right and left seat frames 13 extending backward from the upper end parts of the right and left rear frames 8 to rise as it goes backward; and a pair of right and left support frames 14 extending from the lower ends of the right and left rear frames 8 obliquely upward to the rear toward the longitudinal middle parts of the right and left seat frames 13.

The lower ends of the right and left rear frames 8 and the rear ends of the right and left lower frames 11 are integrally connected to each other through a pair of right and left curved parts 8a. A pair of right and left pivot brackets 15 is bonded to the inner peripheral sides (the front sides) of the right and left curved parts 8a by welding. The front end of a swing arm 21 is pivoted vertically rockably on the right and left pivot brackets 15 through pivot shafts 15a. A rear wheel 22 as a driving wheel is journaled to the rear end of the swing arm 21.

In the drawing, the reference sign 23 designates a rear cushion extending between the rear end of the main frame 7 and the front end side of the swing arm 21, the reference sign 24 a seat for seating an occupant, which is supported on the right and left seat frames 13, and the reference sign 25 a fuel tank supported on the main frame 7 in front of the seat 24, respectively.

An engine (an internal combustion engine) 30 as a motor of the motorcycle 1 is mounted inside the body frame 5. The engine 30 is an air-cooled single cylinder engine, and a cylinder 32 is substantially vertically erected on a crankcase 31 constituting the lower part thereof. The output of the engine 30 is transmitted from the left of the back part of the crankcase 31 to the rear wheel 22 through a chain transmission mechanism (not shown).

A throttle body 33 is connected to the rear of the cylinder 32, and an air cleaner (not shown) is connected to the rear of the throttle body 33. An exhaust pipe 34 is connected to the front of the cylinder 32. The exhaust pipe 34 is laid to the right of the body, then caused to branch, and connected to a pair of right and left silencers 35 disposed on both sides of the back part of the body.

A synthetic resin body cover is fitted to the periphery of the body frame 5. To be precise, a front side cover 36 is fitted to the side of the front of the body frame 5, and a rear side cover 37 is fitted to the side of the back part of the body frame 5. A rear end cover 38 is fitted to the rear of the seat 24, and a rear end under cover 39 is fitted to the lower side of the rear end cover 38.

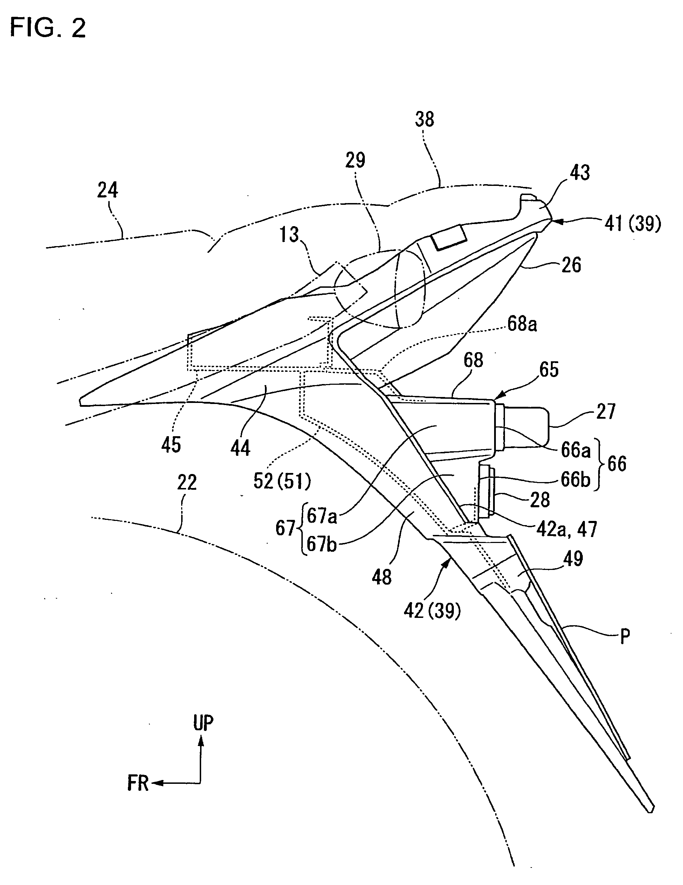

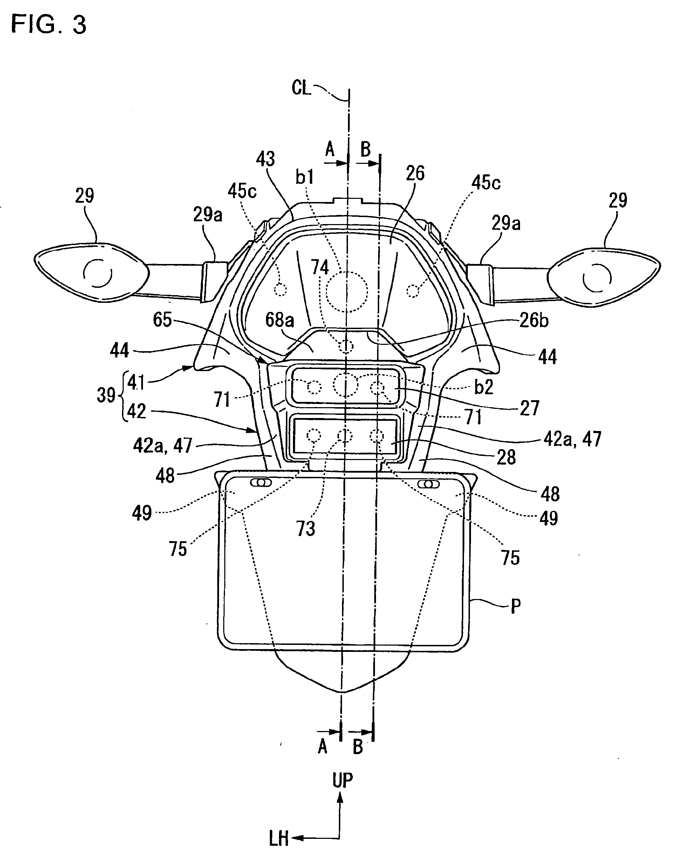

As shown in Figs. 2 and 3, the rear end under cover 39 integrally includes: a cover base (a fender base) 41 disposed along the back part of the seat frame 13 to obliquely rise as it goes backward as viewed from the side; and a tail end fender 42 extending from the longitudinal middle part of the cover base 41 downward to the rear linearly as viewed from the side.

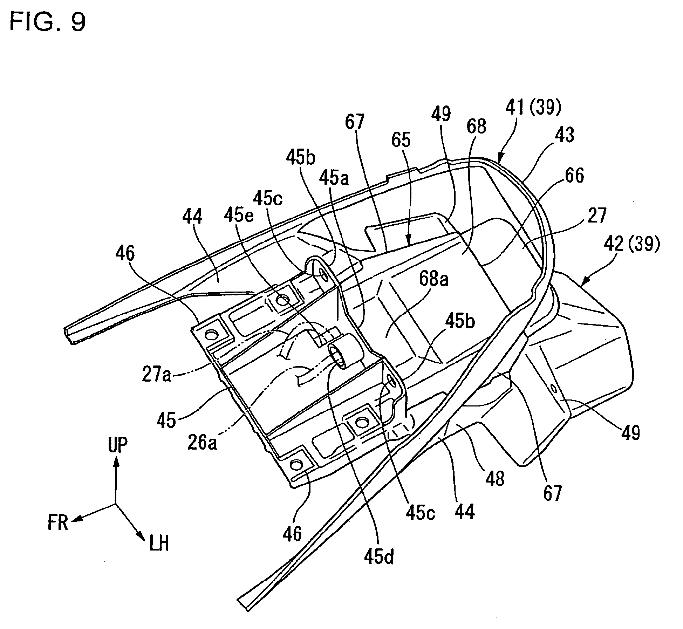

With reference to Fig. 9 together, the cover base 41 integrally includes: an outer frame part 43 U-shaped to open forward along the outer edge shape of the back part of the rear end cover 38 as viewed from the top; right and left inclined parts 44 extending from both sides of the outer frame part 43 downward to the rear and also toward the right and left insides; and a tray part 45 provided between the lower ends of the right and left inclined parts 44.

The tray part 45 is formed rectangular as viewed from the top, and provided to gradually increase in height of an outer peripheral wall as it goes forward.

A pair of right and left fastening parts 46 for fitting the rear end under cover 39 to the seat frame 13 is provided on both right and left sides of the tray part 45. A front wall 45a of the tray part 45 extends toward both right and left sides, and the extended parts form a pair of right and left fastening walls 45b integrated with the front ends of the right and left fastening parts 46 as well.

A rear end of a tail lamp 26 disposed inside the back part of the outer frame part 43 is fastened and fixed to the right and left fastening walls 45b. The right and left fastening walls 45b are respectively formed with bolt insertion holes 45c for inserting stud bolts (not shown) projecting backward from both sides of the rear end of the tail lamp 26, and nuts (not shown) are screwed and tightened to the stud bolts projected forward through the right and left bolt insertion holes 45c, thereby fastening and fixing the rear end of the tail lamp 26 to the right and left fastening walls 45b.

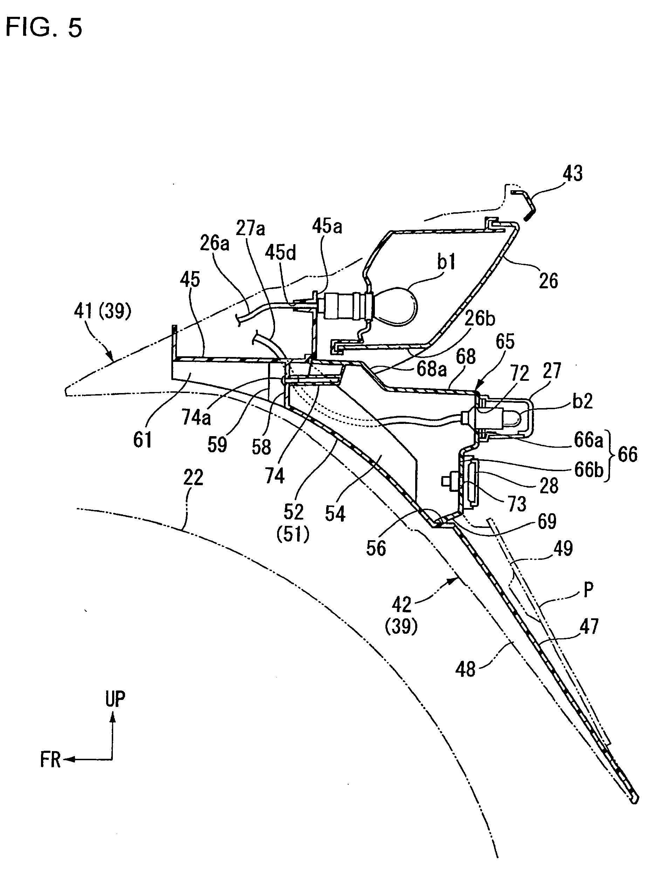

With reference to Fig. 5 together, wiring 26a is extended from the center of the rear end of the tail lamp 26, and the wiring 26a is pulled to the inside of the tray part 45 through a cylindrical insertion hole 45d formed in the lateral center of the front wall 45a of the tray part 45. In the drawing, the reference sign b1 designates a lamp bulb of the tail lamp 26 and the reference sign b2 a lamp bulb of the license lamp 27 mentioned later, respectively.

With reference to Figs. 1 to 3, a tail end fender 42 constitutes a rear fender covering the upside of the rear wheel 22 from above together with an intra-cover fender (not shown) disposed under the seat 24. The tail end fender 42 itself covers the rear side of the top of the rear wheel 22. A pair of right and left rear winkers 29 is disposed on the outside of the outer frame part 43 of the cover base 41. The right and left rear winkers 29 are respectively fitted to the rear end of the seat frame 13 through brackets 29a. A license plate P is disposed on the rear face side of the lower part of the tail end fender 42, and the license lamp 27 for illuminating the license plate P is mounted on the rear face side of the top of the tail end fender 42 through a lamp pedestal 65.

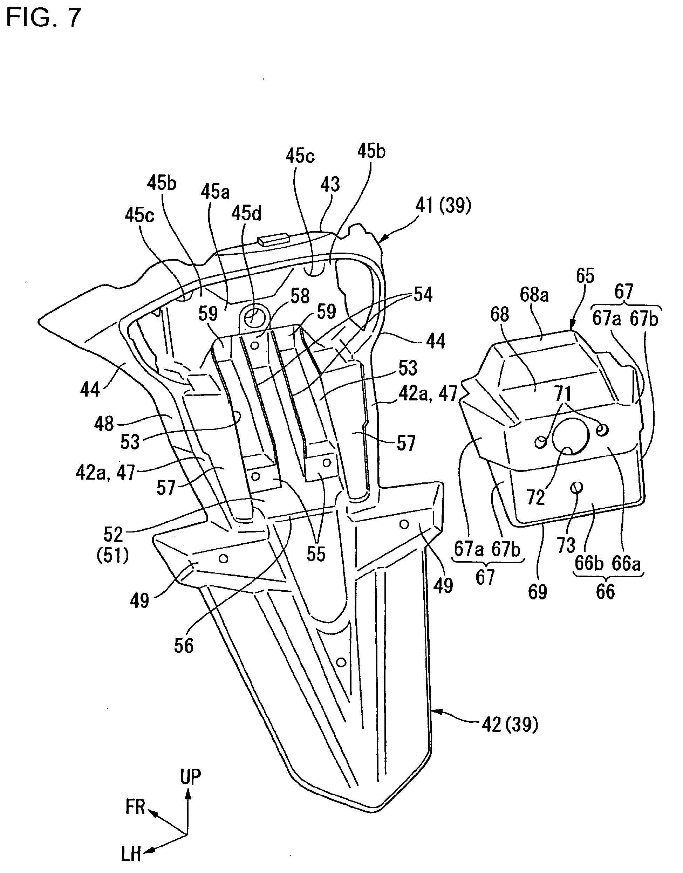

With reference to Figs. 2, 3 and 7, the tail end fender 42 integrally includes: a plate-like part 47 extending between the upper and lower ends thereof and disposed to have a thickness in the longitudinal direction; and right and left erect walls 48 raised forward from the right and left side edges of the plate-like part 47.

The plate-like part 47 is shaped to be suitably projecting and recessed, thereby improving the rigidity of the tail end fender 42 and forming accent in appearance.

The right and left erect walls 48 are provided to gradually increase in rising height as they go toward the upside, and the upper ends thereof are integrally connected to the lower ends of the right and left inclined parts 44.

A pair of right and left plate fitting parts 49 to which the both sides of the upper end of the license plate P can be fitted is formed on the vertical middle part of the tail end fender 42. The right and left plate fitting parts 49 are provided to project right and left to the outside from the upper part and the lower part of the tail end fender and project backward. A lower part (a part below the right and left plate fitting parts 49) of the tail end fender 42 is increased in lateral width more than an upper part (a part above the plate fitting parts 49) of the tail end fender 42.

The top of the tail end fender 42 is formed with a recessed part 51 displacing forward the right and left inside parts thereof.

The recessed part 51, which is shaped rectangular as viewed from the rear, includes: a bottom wall 52 displaced forward to the aftermost face 42a of the top of the tail end fender 42; and right and left sidewalls 53 raised backward from both the left and right side edges of the bottom wall 52. The bottom wall 52 is less inclined than the aftermost face 42a as viewed from the side, and provided to form a curve projecting upward.

A plurality of (for example, a pair of right and left) ribs 54 erecting backward are integrally formed on the rear face side of the bottom wall 52. The respective ribs 54 and the right and left sidewalls 53 are formed like a plate substantially orthogonal to the lateral direction, and right and left lower fastening walls 55, which are formed like a plate substantially orthogonal to the longitudinal direction and shaped rectangular as viewed from the rear, are formed between the right rib 54 of the recessed part 51 and the lower end of the sidewall 53 and between the left rib 54 of the recessed part 51 and the lower end of the sidewall 53, respectively. A stepped part 56 along the lower edge of the recessed part 51 is formed below the right and left lower fastening walls 55. A pair of right and left flat parts 57 a little displaced forward to the aftermost face 42a is provided on the right and left outsides of the recessed part 51, and the aftermost face 42a remains on the right and left outsides.

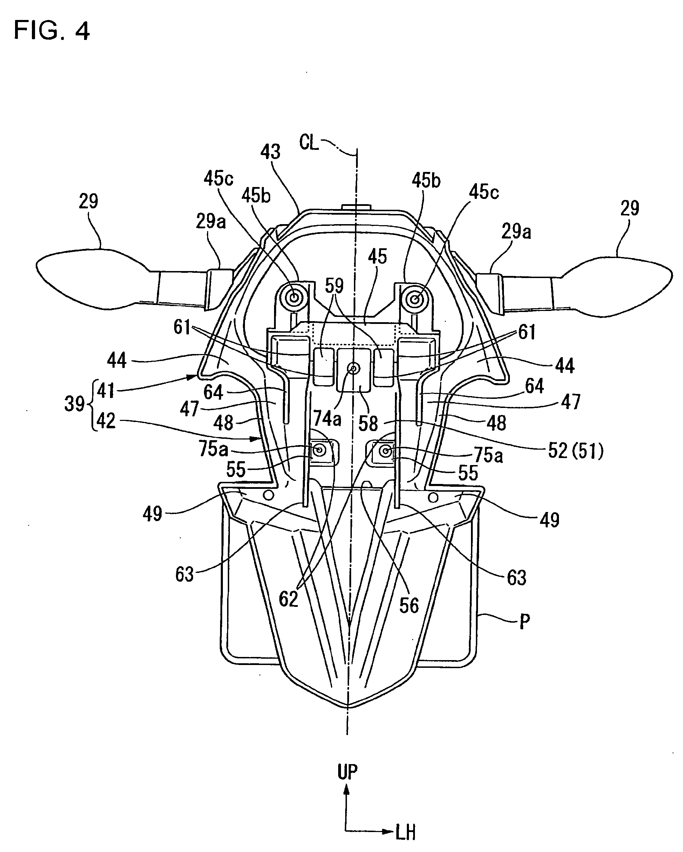

With reference to Figs. 4 to 6 together, a central suspended wall 58 and the right and left suspended walls 59, which are raised downward, are integrally formed on the lower side of the back part of the tray part 45. The respective suspended walls 58, 59 are formed in the shape of a plate substantially orthogonal to the longitudinal direction and shaped rectangular as viewed from the rear, and the right and left suspended walls 59 are provided to displace forward to the central suspended wall 58. The respective suspended walls 58, 59 constitute a part of the tray part 45 (the cover base 41).

The upper ends of the right and left sidewalls 53 and the right and left ribs 54 abut on the lower surface of the back part of the tray part 45 to be integrally connected to each other. The right and left suspended walls 59 are formed between the right sidewall 53 of the recessed part 51 and the upper end of the rib 54, and between the left sidewall 53 of the recessed part 51 and the upper end of the rib 54, respectively, and the central suspended wall 58 is formed between the upper ends of the right and left ribs 54.

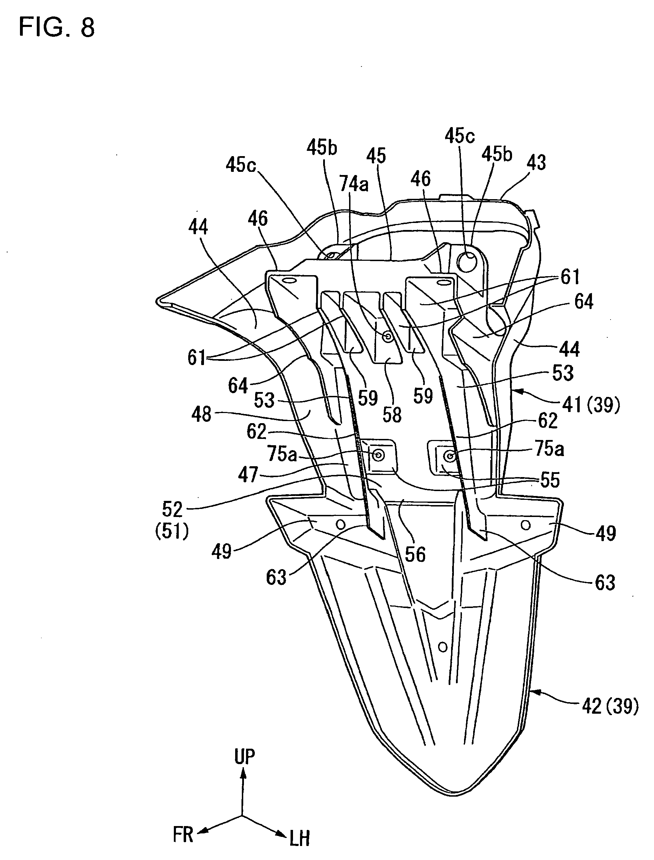

With reference to Fig. 8 together, a plurality of (for example, four) reinforcing ribs 61 shaped like a plate substantially orthogonal to the lateral direction are formed side by side on the lower side of the front of the tray part 45 and in front of the respective suspended walls 58, 59. The respective reinforcing ribs 61 are located at the same lateral positions as those of the right and left sidewalls 53 and the right and left ribs 54, and the respective reinforcing ribs 61, the right and left sidewalls 53 and the right and left ribs 54 are provided to be integrally connected to each other with the respective suspended walls 58, 59 interposed between them.

Short ribs 62 raised forward are integrally formed on the right and left side edges of the front face of the lower part of the recessed part 51. The right and left short ribs 62 are provided to increase in rising height as they go downward. Extended parts 63 extending downward from the lower end of the recessed part 51 and integrally connected to the front faces of the right and left plate fitting parts 49 are connected to the lower sides of the short ribs 62. Outer ribs 64 extending between the outer edges of the lower surfaces of the right and left fastening parts 46 and the right and left outsides of the rear face of the upper part of the plate-like part 47 are provided outside the right and left outer reinforcing ribs 61.

As shown in Figs. 2, 3, 5, 6 and 7, a lamp pedestal 65 covering the recessed part 51 and the right and left flat parts 57 from the rear is mounted at the back of the upper part of the plate-like part 47. The lamp pedestal 65 is formed in the shape of a container made of synthetic resin as a separate body from the tail end fender 42 and opened forward, and the open end thereof is opposite to the recessed part 51 and the right and left flat parts 57.

The lamp pedestal 65 integrally includes: a rear end wall 66 shaped like a plate substantially orthogonal to the longitudinal direction, and shaped square as viewed from the rear; right and left sidewalls 67 raised forward from the right and left side edges of the rear end wall 66; and upper and lower walls 68, 69 raised forward from the upper and lower edges of the rear end wall 66.

The upper part of the rear end wall 66 is an upper stage mounting part 66a for mounting the license lamp 27, and the lower part of the rear end wall 66 is a lower stage mounting part 66b for mounting a reflector 28. The lower stage mounting part 66b is provided to displace ahead of the upper stage mounting part 66a.

The upper parts of the right and left sidewalls 67 are upper stage sidewalls 67a connected to the fronts of the side edges of the upper stage mounting part 66a, and the lower parts of the right and left sidewalls 67 are lower stage sidewalls 67b connected to the fronts of the side edges of the lower stage mounting part 66b. The upper stage sidewalls 67a are provided to project right and left to the outside from the lower stage sidewalls 67b. The right and left sidewalls 67 are provided to decrease in rising height as they go downward according to the inclination of the tail end fender 42 as viewed from the side.

The rear end of the license lamp 27 is fastened and fixed to the upper stage mounting part 66a. The upper stage mounting part 66a is formed with a pair of right and left bolt insertion holes 71 for inserting a pair of right and left stud bolts (not shown) projecting backward from both sides of the rear end of the license lamp 27, and nuts (not shown) are screwed and tightened to the respective stud bolts projected forward through the right and left bolt insertion holes 71, thereby fastening and fixing the rear end of the license lamp 27 to the upper stage mounting part 66a.

Wiring 27a is extended from the center of the rear end of the license lamp 27, the wiring 27a enters the recessed part 51 through a wiring insertion hole 72 between the right and left bolt insertion holes 71, and is guided upward while being suitably held on the right and left sidewalls 53 and the right and left ribs 54 in the recessed part 51, and laid to the inside of the tray part 45 through an insertion hole 45e (See Fig. 9), for example, formed on the right of the back part of the tray 45. The wiring 27a laid to the inside of the tray part 45 is connected together with the wiring 26a of the tail lamp 26 to the main harness (not shown).

The rear face part of the reflector 28 is fastened and fixed to the lower stage mounting part 66b. The lower stage mounting part 66b is formed with a bolt insertion hole 73 for inserting a stud bolt (simply shown in Fig. 5) projecting backward from the center of the rear face of the reflector 28, and a nut (simply shown in Fig. 5) is screwed and tightened to the stud bolt projecting forward through the bolt inserting hole 73, thereby fastening and fixing the rear face part of the reflector 28 to the lower stage mounting part 66b.

Referring to Fig. 5, an upper front projecting part 68a projecting upward in the shape of a trapezoid as viewed from the rear is formed on the front of an upper wall 68. An upper fastening boss 74 which can fit the upper part of the lamp pedestal 65 to the central suspended wall 58 is projected forward on the inside of the upper front projecting part 68a. The upper fastening boss 74 abuts on the central suspended wall 59 from the rear, and a small screw 74a piercing the central suspended wall 58 from the front is screwed and tightened to the upper fastening boss 74, thereby fastening and fixing the upper part of the lamp pedestal 65 to the central suspended wall 58 (the cover base 41). A lamp recessed part 26b recessed upward to be away from the upper front projecting part 68a is formed on the lower end of the tail lamp 26.

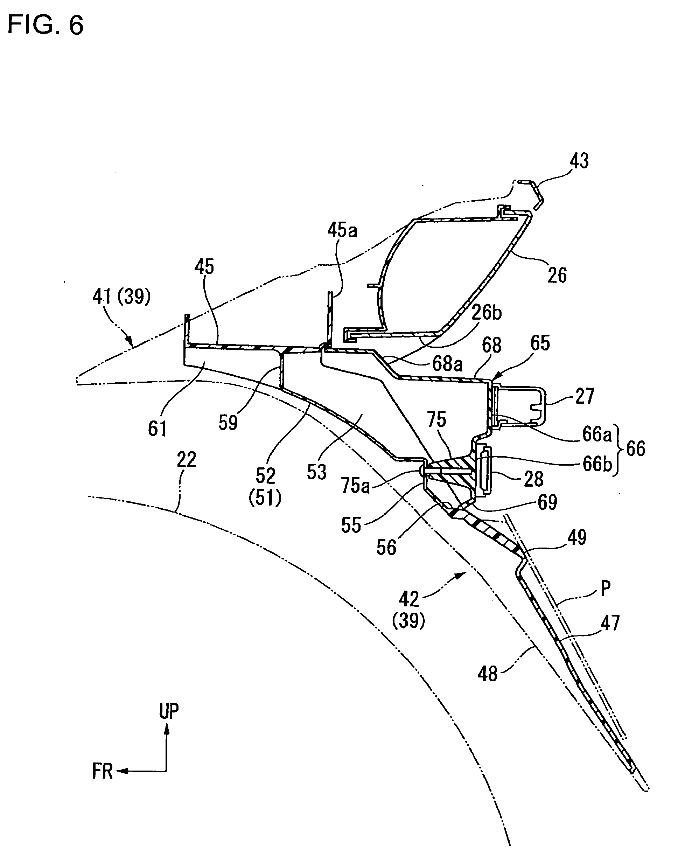

Referring to Fig. 6, a pair of right and left lower fastening bosses 75 which can fit lower part of the lamp pedestal 65 to the right and left lower fastening walls 55 is projected forward on the front side of the lower mounting part 66b. The right and left lower fastening bosses 75 respectively abut on the right and left lower fastening walls 55 from the rear, and a small screw 75a piercing the right and left lower fastening walls 55 from the front is screwed and tightened to the right and left lower fastening bosses 75, thereby fastening and fixing the lower part of the lamp pedestal 65 to the right and left lower fastening walls 55 (the tail end fender 42).

The lamp pedestal 65 is thus mounted extending between the cover base 41 and the tail end fender 42 by fastening and fixing at three places in total, and the license lamp 27 and the reflector 28 are mounted to the tail end fender 42 (the rear end under cover 39) through the lamp pedestal 65.

As described above, the back part structure of the body in the saddle-ride type vehicle in the embodiment is applied to the motorcycle 1 including the tail end fender 42, which is supported at the back part of the body frame 5 and extends downward to cover the upside rear of the rear wheel 22, and the license lamp 27, which is supported on the rear face of the upside of the tail end fender 42, includes: the lamp pedestal 65 formed as a separate body from the tail end fender 42 and interposed between the tail end fender 42 and the license lamp 27, wherein the lamp pedestal 65 is formed in the shape of the container opened forward, and fitted to the tail end fender 42 to project backward from the tail end fender 42, the license lamp 27 is mounted on the rear end wall 66 of the lamp pedestal 65, the top of the tail end fender 42 is provided with the recessed part 51 having the bottom wall 52 displacing forward to the aftermost face 42a thereof, the sidewalls 53 raised backward from both side edges of the bottom wall 52, and the rib 54 raised backward from the rear face of the bottom wall 52, and the recessed part 51 is covered by the lamp pedestal 65 from the rear.

This configuration may easily cope with the case where the license lamp 27 is projected at the back of the tail end fender 42, the reinforcing parts can be formed on the upside (the proximal end side) of the tail end fender 42 in proportion to increase in number of parts, and also the recessed part 51 and the ribs 54 added to the bottom wall 52 thereof are hidden by the lamp pedestal 65, whereby the appearance can be improved.

In the above back part structure of the body, the wiring 27a extending from the license lamp 27 is stored in the lamp pedestal 65, and the wiring 27a is guided to the body side above the tail end fender 42 along the vertically extending ribs 54, whereby the wiring 27a of the license lamp 27 is made inconspicuous so that the appearance can be improved, and also the wiring 27a can be guided to the body side while being held and protected without any new part.

Furthermore, in the above back part structure of the body, the plate fitting part 49 for the license plate P is provided below the license lamp 27 in the tail end fender 42, whereby the license plate P below it can be effectively illuminated by the license lamp 27 disposed to project at the back of the tail end fender 42 so as to further improve the conspicuousness of the license plate P.

Furthermore, in the above back part structure of the body, the cover base 41 is integrally formed above the tail end fender 42, the cover base 41 supports the tail lamp 26 as a separate body from the license lamp 27 and is fitted to the body frame 5, and the lamp pedestal 65 is mounted extending between the tail end fender 42 and the cover base 41, whereby the tail end fender 42 can be reinforced also by mounting the lamp pedestal 65.

Furthermore, in the above back part structure of the body, the reinforcing ribs 61 are formed to be connected to the sidewalls 53 and the ribs 54 of the recessed part 51 on the cover base 41, whereby the tail end fender 42 and the cover base 41 can be integrated with each other with high rigidity.

The invention is not limited to the above embodiment, but a rib or the like for reinforcing the upside of the tail end fender 42 may be formed on the front side of the bottom wall 52. The reinforcing part formed on the bottom wall 52 may be formed by either of a recessed part and a projecting part. Further, the reinforcing part is not limited to the vertically extending one, but it may be extended vertically, laterally and obliquely, or formed like a mesh. The configuration in the above embodiment is an example of the present invention, and various modifications may be made in the invention without departing from the scope of the invention defined by the appended claims.

In a back part structure of a body in a saddle-like type vehicle, a light device such as a license lamp can be efficiently installed on a tail end fender extending downward from the back part of the body.

This back part structure includes a lamp pedestal (65) formed as a separate body from the tail end fender (42) and interposed between the tail end fender (42) and the light device, wherein the lamp pedestal (65) is formed in the shape of a container opened forward, the top of the tail end fender (42) is provided with a recessed part (51) displacing forward to the aftermost face (42a) thereof, ribs (54) for reinforcing the top of the tail end fender (42) is formed on the bottom wall (52) of the recessed part (51), and the ribs (54) are covered by the lamp pedestal (65) from the rear.

## Claims

1. A back part structure of a body in a saddle ride-type vehicle (1), including a tail end fender (42) which is to be supported at a back part of a body frame (5) and extends downward to cover upper rear of a rear wheel (22), and a light device (27) which is supported on a rear face of an upside of the tail end fender (42), comprising:
a lamp pedestal (65) formed as a separate body from the tail end fender (42) and interposed between the tail end fender (42) and the light device (27), wherein: the lamp pedestal (65) is formed in a shape of a container opened forward, and fitted to the tail end fender (42) to project backward from the tail end fender (42);
the light device (27) is mounted on a rear end wall (66) of the lamp pedestal (65); and
a top of the tail end fender (42) is formed with a recessed part (51) having a bottom wall (52) displacing forward to an aftermost face (42a) thereof, **characterized in that**
a reinforcing part (54) for reinforcing the top of the tail end fender (42) is formed on the bottom wall (52) of the recessed part (51);
the reinforcing part (54) is covered by the lamp pedestal (65) from the rear; and
a rib (54) as the reinforcing part (54) is formed on a rear face side of the bottom wall (52) of the recessed part (51).

2. The back part structure of a body in a saddle-ride type vehicle according to claim 1, wherein wiring (27a) extended from the light device (27) is stored in the lamp pedestal (65), and the wiring (27a) is guided to the body side above the tail end fender (42) by the rib (54).

3. The back part structure of a body in a saddle-ride type vehicle according to claim 1 or 2, wherein the light device (27) is a license lamp (27), and a license plate fitting part (49) is provided below the license lamp (27) in the tail end fender (42).

4. The back part structure of a body in a saddle-ride type vehicle according to one of claims 1 to 3,
wherein: a fender base (41) is integrally formed above the tail end fender (42), the fender base (41) supporting a second light device (26) as a separate body from the light device (27) and being fitted to the body frame (5); and
the lamp pedestal (65) is mounted extending between the tail end fender (42) and the fender base (41).

5. The back part structure of a body in a saddle-ride type vehicle according to claim 4, wherein in the fender base (41), a second reinforcing part (61) is formed to be connected to the reinforcing part (54) formed on the bottom wall (52) of the recessed part (51).

## Patentansprüche

1. Hinterteilstruktur von einem Körper in einem Fahrzeug (1) vom Sattelfahrtyp, umfassend einen Heckkotflügel (42), welcher an einem Hinterteil von einem Körperrahmen (5) abzustützen ist und sich nach unten erstreckt, um eine obere Rückseite von einem Hinterrad (22) abzudecken, und eine Beleuchtungseinrichtung (27), welche an einer hinteren Fläche von einer Oberseite von dem Heckkotflügel (42) abgestützt ist, umfassend:
einen Lampensockel (65), welcher als ein separater Körper von dem Heckkotflügel (42) ausgebildet ist und zwischen dem Heckkotflügel (42) und der Beleuchtungseinrichtung (27) angeordnet ist, wobei: der Lampensockel (65) in einer Form eines nach vorne hin geöffneten Behälters ausgebildet ist und an dem Heckkotflügel (42) derart angebracht ist, dass er von dem Heckkotflügel (42) nach hinten vorsteht;
die Beleuchtungseinrichtung (27) an eine hintere Endwand (66) von dem Lampensockel (65) montiert ist; und
eine obere Seite von dem Heckkotflügel (42) mit einem ausgesparten Teil (51) ausgebildet ist, welches eine sich nach vorne zu einer hintersten Fläche (42a) davon verlagernde Bodenwand (52) hat, **dadurch gekennzeichnet, dass**
ein Verstärkungsteil (54) zum Verstärken des oberen Endes von dem Heckkotflügel (42) an der Bodenwand (52) von dem ausgesparten Teil (51) ausgebildet ist;
das Verstärkungsteil (54) von der Rückseite her durch den Lampensockel (65) abgedeckt ist; und
eine Rippe (54) als das Verstärkungsteil (54) an einer Seite einer hinteren Fläche von der Bodenwand (52) von dem ausgesparten Teil (51) ausgebildet ist.

2. Hinterteilstruktur von einem Körper in einem Fahrzeug vom Sattelfahrtyp nach Anspruch 1, wobei sich eine Verkabelung (27a), welche sich von der Beleuchtungseinrichtung (27) aus erstreckt, in dem Lampensockel (65) untergebracht ist und die Verkabelung (27a) zur Körperseite oberhalb des Heckkotflügels (42) durch die Rippe (54) geführt ist.

3. Hinterteilstruktur von einem Körper in einem Fahrzeug vom Sattelfahrtyp nach Anspruch 1 oder 2, wobei die Beleuchtungseinrichtung (27) eine Kennzeichenbeleuchtung (27) ist und ein Kennzeichenmontageteil (49) unter der Kennzeichenbeleuchtung (27) in dem Heckkotflügel (42) vorgesehen ist.

4. Hinterteilstruktur von einem Körper in einem Fahrzeug vom Sattelfahrtyp nach einem der Ansprüche 1 bis 3,
wobei: eine Kotflügelbasis (41) integral oberhalb des Heckkotflügels (42) ausgebildet ist, wobei die Kotflügelbasis (41) eine zweite Beleuchtungseinrichtung (26) als einen separaten Körper von der Beleuchtungseinrichtung (27) abstützt und an dem Körperrahmen (5) angebracht ist; und
der Lampensockel (65) so montiert ist, dass er sich zwischen dem Heckkotflügel (42) und der Kotflügelbasis (41) erstreckt.

5. Hinterteilstruktur von einem Körper in einem Fahrzeug vom Sattelfahrtyp nach Anspruch 4, wobei in der Kotflügelbasis (41) ein zweites Verstärkungsteil (61) ausgebildet ist, welches mit dem Verstärkungsteil (54) zu verbinden ist, welches an der Bodenwand (52) von dem ausgesparten Teil (51) ausgebildet ist.

## Revendications

1. Structure de partie arrière d'une carrosserie dans un véhicule à monture à selle (1) incluant un garde-boue d'extrémité arrière (42) qui doit être supporté sur une partie arrière d'un cadre de carrosserie (5) et s'étend vers le bas pour couvrir la partie supérieure arrière d'une roue arrière (22), et un dispositif d'éclairage (27) qui est supporté sur une face arrière d'un côté supérieur du garde-boue d'extrémité arrière (42) comprenant :
un socle de lampe (65) formé comme un corps séparé à partir du garde-boue d'extrémité arrière (42) et interposé entre le garde-boue d'extrémité arrière (42) et le dispositif d'éclairage (27), dans lequel : le socle de lampe (65) est formé comme un contenant ouvert vers l'avant et monté sur le garde-boue d'extrémité arrière (42) pour faire saillie vers l'arrière du garde-boue d'extrémité arrière (42) ;
le dispositif d'éclairage (27) est monté sur une paroi d'extrémité arrière (66) du socle de lampe (65) ; et
un dessus du garde-boue d'extrémité arrière (42) est formé avec une partie évidée (51) présentant une paroi inférieure (52) se déplaçant vers l'avant vers une face la plus en arrière (42a) de celle-ci, **caractérisée en ce que**
une partie de renforcement (54) pour le renforcement du dessus du garde-boue d'extrémité arrière (42) est formée sur la paroi inférieure (52) de la partie évidée (51) ;
la partie de renforcement (54) est couverte par le socle de lampe (65) depuis l'arrière ; et
une nervure (54) comme la partie de renforcement (54) est formée sur un côté de face arrière de la paroi inférieure (52) de la partie évidée (51).

2. Structure de partie arrière d'une carrosserie dans un véhicule à monture à selle selon la revendication 1, dans laquelle un câblage (27a) étendu depuis le dispositif d'éclairage (27) est stocké dans le socle de lampe (65) et le câblage (27a) est guidé vers le côté de carrosserie au-dessus du garde-boue d'extrémité arrière (42) par la nervure (54).

3. Structure de partie arrière d'une carrosserie dans un véhicule à monture à selle selon la revendication 1 ou 2, dans laquelle le dispositif d'éclairage (27) est une lampe éclaire-plaque (27) et une partie de montage de plaque d'immatriculation (49) est prévue sous la lampe éclaire-plaque (27) dans le garde-boue d'extrémité arrière (42).

4. Structure de partie arrière d'une carrosserie dans un véhicule à monture à selle selon l'une quelconque des revendications 1 à 3,
dans laquelle : une base de garde-boue (41) est intégralement formée au-dessus du garde-boue d'extrémité arrière (42), la base de garde-boue (41) supportant un second dispositif d'éclairage (26) comme un corps séparé depuis le dispositif d'éclairage (27) et étant montée sur le cadre de carrosserie (5) ; et le socle de lampe (65) est monté de manière à s'étendre entre le garde-boue d'extrémité arrière (42) et la base de garde-boue (41).

5. Structure de partie arrière d'une carrosserie dans un véhicule à monture à selle selon la revendication 4, dans laquelle, dans la base de garde-boue (41), une seconde partie de renforcement (61) est formée pour être reliée à la partie de renforcement (54) formée sur la paroi inférieure (52) de la partie évidée (51).
